# EUROPÄISCHE PATENTANMELDUNG

(11) **EP 1 234 855 A1**
(43) Veröffentlichungstag der Anmeldung: **28.08.2002**
(21) Anmeldenummer: 02290122.7
(22) Anmeldetag: 17.01.2002
(51) Int. Cl.: C08L 27/18, H01B 3/44

(54) **Polymermischung aus einem Fluorpolymeren und einem Schwefelpolymeren**

(30) Priorität: 21.02.2001 DE 10108347
(71) Anmelder: Nexans, 75008 Paris (FR)
(72) Erfinder: Marx, Uwe, 92353 Postbauer-Heng (DE)
(74) Vertreter: Döring, Roger, Dipl.-Ing.

(57) **Zusammenfassung**

Es wird eine Polymermischung aus einem thermoplastisch verarbeitbaren Fluorpolymeren und einem Schwefelpolymeren beschrieben, wobei der Anteil des Schwefelpolymeren an der Polymermischung 0,1 bis 20 Gew% beträgt.

## Beschreibung

Die Erfindung betrifft eine Polymermischung auf der Basis von Fluorpolymeren.

Fluorpolymere wie beispielsweise Polytetrafluorethylen, Ethylen-tetrafluorethylen-Copolymer, Tetrafluorethylen-perfluorpropylen-Copolymer, Perfluoralkoxy-Copolymer, Polyvinylidenfluorid, Polyvinylfluorid, Polychlortrifluorethylen, Ethylen-Chlortrifluorethylen-Copolymer oder auch Mischungen dieser Polymere sind unbrennbar, ausgezeichnet wetterfest und im Gebrauchsbereich physiologisch indifferent. Sie weisen von anderen Kunststoffen nicht erreichte weite untere und obere Grenzen ihrer Anwendungstemperaturbereiche, extreme Korrosions- und Lösungsmittelbeständigkeit sowie ausgezeichnete elektrische Werte auf, die im einzelnen abhängig von ihrer chemischen Struktur sind.

Polytetrafluorethylen hat anwendungstechnisch wertvolle Eigenschaften in optimaler Kombination. Nachteilig ist, daß Polytetrafluorethylen wegen seiner extrem hohen Viskosität oberhalb der Schmelztemperatur von 327 °C thermoplastisch nicht verarbeitbar ist. Extrudierte Formen aus Polytetrafluorethylen, insbesondere Isolierungen oder Mäntel auf Kabel und Leitungen sind nur durch die sog. Ramextrusion oder im sog. "Pasten"-extrusionsverfahren herstellbar.

Tetrafluorethylen-perfluorpropylen-Copolymer (FEP) und Perfluoralkoxy-Copolymer (PFA) sind für die thermoplastische Verarbeitung abgewandelt, erfordern aber sehr hohe Verarbeitungstemperaturen.

Wesentlich günstiger bei der Verarbeitung verhält sich Ethylen-Tetrafluorethylen-Copolymer (ETFE) jedoch wird die Verarbeitbarkeit in besser zugänglichen Temperaturbereichen erkauft durch eine etwa 100 K niedrigere maximale Gebrauchstemperatur.

Allen zitierten Fluorpolymeren ist gemeinsam, daß aus diesen Materialien hergestellte Gegenstände sehr teuer sind. Zum einen sind die Fluorpolymere gegenüber den meisten anderen thermoplastischen Kunststoffen sehr teuer, zum anderen kommen noch die höheren Kosten für die Verarbeitung hinzu.

Aus diesem Grund ist der Anwendungsbereich für diese Werkstoffe auf Spezialitäten begrenzt.

Der vorliegenden Erfindung liegt die Aufgabe zugrunde, eine Polymermischung auf der Basis von Fluorpolymeren bereitzustellen, die thermoplastisch verarbeitbar ist und wesentlich preisgünstiger in der Anschaffung ist als die bisher verwendeten reinen Fluorpolymere.

Diese Aufgabe wird durch eine in Anspruch 1 angegebene Polymermischung gelöst.

Weitere vorteilhafte Ausgestaltungen der Erfindung sind in den Unteransprüchen erfaßt.

Neben den sich aus der Aufgabenstellung selbst ergebenden Vorteilen hat sich noch als vorteilhaft herausgestellt, daß sich eine höhere Zugfestigkeit und eine höhere Reißdehnung im Vergleich zu reinen Fluorpolymeren ergeben kann.

Durch die Zugabe von Schwefelpolymeren kann die Verarbeitungstemperatur von Fluorpolymeren gesenkt werden.

Die Erfindung ist anhand eines Ausführungsbeispiels näher erläutert.

Es werden
90 Teile Tetrafluorethylen/Hexafluor-propylen-Copolymerisat (FEP) und
10 Teile Polysulfon (PSU)
in Granulatform gemischt in einen Extruder eingegeben und bei einer Temperatur von 350 °C auf einen elektrischen Leiter aufgebracht.

Als Vergleich wurde reines Tetrafluorethylen/Hexafluor-propylen-Copolymerisat (FEP) als Granulat in einen Extruder eingegeben und bei einer Temperatur von 360 °C auf einen elektrischen Leiter aufgebracht. Der Leiterquerschnitt betrug in beiden Fällen 0,5 mm², die Wanddicke der Isolierschicht 0,2 mm.

Die ummantelten elektrischen Leiter wurde einer Qualitätsprüfung unterzogen.

Dabei ergaben sich folgende Werte:

| | Teile | |
|---|---|---|
| FEP | 100 | 90 |
| PSU | | 10 |

| Mechanische Eigenschaften | | |
|---|---|---|
| σ_{b} [Mpa] | 27 | 40 |
| ε_{R}[%] | 205 | 215 |

| Mechanische Eigenschaften nach der Alterung | | |
|---|---|---|
| σ_{b} [Mpa] | 27 | 45 |
| ε_{R}[%] | 210 | 205 |
| Wärmeschock (250 °C/6h), 1 kV/1 min; | | |
| bestanden | ja | ja |

| Elektrische Eigenschaften | | |
|---|---|---|
| tan δ | 1 x 10⁻³ | 1 x 10⁻³ |
| Durchgangswiderstand | 7,9 - 10¹⁶ | 4,0 x 10¹⁶ |
| Dielektrizitätskonstante | 1,91 | 1,93 |

| Extrusionstemperaturen | | |
|---|---|---|
| Temperatur [°C] | 330 - 390 | 330 - 380 |

## Patentansprüche

1. Polymermischung aus einem thermoplastisch verarbeitbaren Fluorpolymeren und einem Schwefelpolymeren, wobei der Anteil des Schwefelpolymeren an der Polymermischung 0,1 bis 20 Gew% beträgt.

2. Polymermischung nach Anspruch 1, **dadurch gekennzeichnet, daß** der Anteil des Schwefelpolymeren zwischen 10 und 20 % vorzugsweise zwischen 15 und 20 % liegt.

3. Polymermischung nach Anspruch 1 oder 2, **dadurch gekennzeichnet, daß** das Fluorpolymer ein Tetrafluorethylen-perfluorpropylen-Copolymer (FEP) ist.

4. Polymermischung nach Anspruch 1 oder 2, **dadurch gekennzeichnet, daß** das Fluorpolymer ein Ethylen-tetrafluorethylen-Copolymer (ETFE) ist.

5. Polymermischung nach einem der Ansprüche 1 bis 4, **dadurch gekennzeichnet, daß** das Schwefelpolymer Polyphenylensulfid (PPS) ist.

6. Polymermischung nach einem der Ansprüche 1 bis 4, **dadurch gekennzeichnet, daß** das Schwefelpolymer Polysulfon (PSU) ist.

7. Polymermischung nach einem der Ansprüche 1 bis 4, **dadurch gekennzeichnet, daß** das Schwefelpolymer Polyethersulfon (PES) ist.

8. Polymermischung nach einem der Ansprüche 1 bis 7, **dadurch gekennzeichnet, daß** eines oder mehrere der Schwefelpolymere in der Polymermischung enthalten sind.

9. Verwendung einer Polymermischung nach einem der Ansprüche 1 bis 8 als Isolierschicht auf elektrischen Leitern.

10. Verwendung einer Polymermischung nach einem der Ansprüche 1 bis 8, als Mantelmischung für elektrische Kabel oder Leitungen.
